# EUROPEAN PATENT APPLICATION

(11) **EP 4 632 585 A1**
(43) Date of publication of application: **15.10.2025**
(21) Application number: 23902214.8
(22) Date of filing: 14.09.2023
(51) Int. Cl.: G06F 12/06

(54) **METHOD FOR DETERMINING FLASH TRANSLATION LAYER (FTL) ALGORITHM, AND DEVICE**

(30) Priority: 14.12.2022 CN 202211608167
(71) Applicant: xFusion Digital Technologies Co., Ltd., Zhengzhou, Henan 450046 (CN)
(72) Inventor: JIN, Yaozu, Zhengzhou, Henan 450046 (CN)
(74) Representative: MERH-IP Matias Erny Reichl Hoffmann Patentanwälte PartG mbB
(86) International application number: PCT/CN2023/118904
(87) International publication number: WO 2024/125009

(57) **Abstract**

The present application provides a method for determining a flash translation layer FTL algorithm and a device, which relates to the field of storage device technologies. In the method, a solid state drive determines address mapping information based on a first FTL algorithm during a time period to indicate a correspondence between a logical address and a physical address of the solid state drive during a process of processing a read/write task during the time period. Afterward, the solid state drive determines a second FTL algorithm from a plurality of FTL algorithms, and enables target address mapping information determined based on the second FTL algorithm. Since the read/write task processed by the solid state drive during the time period are generally of a same type, and performance of processing the read/write task during the time period based on the second FTL algorithm is higher than performance of processing the read/write task during the time period based on the first FTL algorithm, the solid state drive enables the target address mapping information determined based on the second FTL algorithm, which helps to improve read/write efficiency when the read/write task is processed in a subsequent time period, thereby contributing to enhancing read/write performance of the solid state drive.

## Description

This application claims priority to the Chinese Patent Application No. 202211608167.7, filed with the China National Intellectual Property Administration on December 14, 2022 and entitled "METHOD AND DEVICE FOR DETERMINING FLASH TRANSLATION LAYER ALGORITHM", which is incorporated herein by reference in its entirety.

### TECHNICAL FIELD

The present application relates to the field of storage device technologies, and in particular, to a method for determining a flash translation layer algorithm and a device.

### BACKGROUND

Currently, a computer device sends read/write tasks to a solid state drive (solid state disk or solid state drive, SSD) by using logical block addresses (logical block address, LBA) determined based on a drive capacity, while the solid state drive reads and writes data by using physical addresses of the solid state drive. A mapping table of the logical addresses and the physical addresses is managed by a flash translation layer (flash translation layer, FTL) algorithm.

In related technologies, only one FTL algorithm is stored in a solid state drive. When the solid state drive is started for the first time, a mapping table based on the FTL algorithm is generated. Afterward, the solid state drive keeps maintaining the mapping table between logical addresses and physical addresses based on the FTL algorithm. In this way, when the FTL algorithm used in the solid state drive does not match a read/write task subsequently executed by the solid state drive, read/write performance of the drive will be greatly affected.

### SUMMARY

Embodiments of the present application provide a method and a device for determining a flash translation layer algorithm, which is capable of automatically selecting an FTL algorithm matching an executed read/write task from a plurality of FTL algorithms in a solid state drive, thereby helping to improve read/write performance of the solid state drive.

To achieve the above objective, the embodiments of the present application adopt the following technical solutions:

In a first aspect, a method for determining a flash translation layer algorithm applied to a solid state drive is provided, where a plurality of FTL algorithm is stored in the solid state drive, and the plurality of FTL algorithms include a first FTL algorithm; and the method includes: determining address mapping information based on the first FTL algorithm during a time period, where the address mapping information is configured to indicate a correspondence between a logical address and a physical address of the solid state drive during a process of processing a read/write task; determining a second FTL algorithm from the plurality of FTL algorithms; where performance of processing the read/write task during the time period based on the second FTL algorithm is higher than performance of processing the read/write task during the time period based on the first FTL algorithm; and controlling the solid state drive to enable target address mapping information determined based on the second FTL algorithm.

In this solution, the plurality of FTL algorithms are pre-stored in the solid state drive, where the plurality of FTL algorithms include the first FTL algorithm. The solid state drive determines the address mapping information based on the first FTL algorithm during the time period, to indicate the correspondence between the logical address and the physical address of the solid state drive during the processing of the read/write task during the time period. Then, the solid state drive determines the second FTL algorithm from the plurality of FTL algorithms, and enables the target address mapping information determined based on the second FTL algorithm and configured to indicate a correspondence between the logical address and the physical address of the solid state drive during a process of processing the read/write task in a subsequent time period. Since the read/write task processed by the solid state drive during a relatively long time period are generally of a same type, and the performance of processing the read/write task during the time period based on the second FTL algorithm is higher than the performance of processing the read/write task during the time period based on the first FTL algorithm, the solid state drive enables the target address mapping information determined based on the second FTL algorithm, which helps to improve read/write efficiency when processing the read/write task in the subsequent time period, thereby enhancing the read/write performance of the solid state drive.

In addition, the performance of processing the read/write task during the time period based on the second FTL algorithm is higher than the performance of processing the read/write task during the time period based on the first FTL algorithm, which indicates that the second FTL algorithm better matches the solid state drive for the read/write task during the time period. Using the second FTL algorithm that better matches the read/write task during the time period further helps to extend a lifespan of the solid state drive.

In a possible implementation, according to a read/write condition of a plurality of read/write tasks processed based on the first FTL algorithm during the time period, a target read/write type is determined; and based on the target read/write type, the second FTL algorithm is determined from the plurality of FTL algorithms.

In the implementation, a specific implementation for determining the second FTL algorithm is provided. In the implementation, according to the plurality of read/write tasks processed based on the first FTL algorithm during the time period, the solid state drive automatically selects the second FTL algorithm from the plurality of FTL algorithms. This allows the solid state drive to automatically update a used FTL algorithm without user involvement, thus enhancing convenience of FTL algorithm update.

In addition, different read/write types of read/write tasks use the address mapping information in different ways. For example, for a read task, only the address mapping information needs to be queried for determining the physical address corresponding to the logical address carried by the read task. However, for a write task, not only the address mapping information needs to be queried for determining the physical address corresponding to the logical address carried by the write task, but sometimes, the address mapping information needs to be modified. Therefore, the solid state drive, based on the read/write condition of the plurality of read/write tasks, determines the target read/write type, and based on the target read/write type, determines the second FTL algorithm from the plurality of FTL algorithms. This helps better match the second FTL algorithm and the read/write type of the read/write task during the time period, thereby helping to improve the read/write efficiency when the read/write task is processed in the subsequent time period after processed based on the second FTL algorithm.

In another possible implementation, the target read/write type includes a read task and a write task.

In the implementation, a categorization method for the target read/write type is provided. By categorization of the target read/write type into the read task and the write task, the plurality of FTL algorithms need to include only an FTL algorithm that matches the read task and an FTL algorithm that matches the write task. This helps to reduce a quantity of an FTL algorithm that the solid state drive needs to store, thereby helping to reduce storage space occupied by the FTL algorithms. In addition, this helps to reduce duration required to traverse the plurality of FTL algorithms, thereby improving a speed of determining the second FTL algorithm that matches the target read/write type from the plurality of FTL algorithms.

In another possible implementation, in a case that the target read/write type is the write task, the second FTL algorithm includes a DFTL algorithm; and in a case that the target read/write type is the read task, the second FTL algorithm includes a BAN algorithm.

In another possible implementation, the target read/write type includes a sequential read task, a sequential write task, a random write task, and a random read task.

In the implementation, the categorization method for the target read/write type is provided. By categorization of the target read/write type into four types: a sequential read task, a sequential write task, a random write task, and a random read task, accuracy of categorizing the read/write type is improved, and thus accuracy of the read/write type is enhanced. This enables the better matching between the second FTL algorithm and the target read/write type, thereby helping to improve the performance of processing the read/write task during the time period based on the second FTL algorithm.

In another possible implementation, in a case that the target read/write type is the sequential read task or the random read task, the second FTL algorithm includes a BAN algorithm; in a case that the target read/write type is the sequential write task, the second FTL algorithm includes a FAST algorithm; and in a case that the target read/write type is the random write task, the second FTL algorithm includes a DFTL algorithm.

In another possible implementation, according to the read/write condition of the read/write task, determining the target read/write type, includes: based on a proportion of a read task among the plurality of read/write tasks, determining the target read/write type.

In the implementation, based solely on the proportion of the read task among the plurality of read/write tasks, the target read/write type is determined. As the proportion of the read task among the plurality of read/write tasks may represent a ratio of a write task to the read task during the time period. Therefore, determining the target read/write type based on the proportion of the read tasks not only ensures accuracy of a determining result, but also helps to simplify a determining process, thereby improving a speed of obtaining the determining result.

In another possible implementation, based on the proportion of the read task among the plurality of read/write tasks, determining the target read/write type, includes: based on the proportion of the read task among the plurality of read/write tasks and a fluctuation of the proportion of the read tasks, determining the target read/write type.

In the implementation, the fluctuation of the proportion of the read task during the target time period may reflect distribution of a quantity of the read task in different sub time-periods during the target time period. Therefore, by the fluctuation of the read task during the target time period, the proportion of the read task during different time periods during the target time period may be analyzed. For example, in a case that the proportion of the read task fluctuates significantly during the target time period, the proportion of the read task varies significantly during the different time periods. Conversely, in a case that the proportion of the read task fluctuates slightly during the target time period, the quantity of the read task varies slightly during the different time periods. On this basis, in a case that the proportion of the read task fluctuates significantly during the target time period, and the proportion of the read task is small during most of time periods and large during only a few time periods, the read/write type of the read/write task processed by the solid state drive during the time period is a write task. Therefore, by combination of the proportion of the read task and the fluctuation of the proportion of the read task, the read/write type of the read/write task processed by the solid state drive during most of time during the time period may be analyzed. This allows for the determination of the target read/write type based on the read/write type of the read/write task processed by the solid state drive during most of time during the time period, thereby ensuring the read/write performance of the solid state drive during most of the time.

In another possible implementation, based on the proportion of the read task among the plurality of read/write tasks and the fluctuation of the proportion of the read task during the target time period, determining the target read/write type, includes: in a case that the proportion of the read task among the plurality of read/write tasks is greater than or equal to a first threshold, and a fluctuation ratio of the proportion of the read task during the target time period is less than or equal to a second threshold, determining the target read/write type as the read task.

In the implementation, a specific implementation for determining the target read/write type is provided. In the implementation, based on a size relation between the proportion of the read task and the first threshold, and a size relation between the fluctuation ratio of the proportion of the read task and the second threshold, the target read/write type is determined. The determining process is simple and convenient, helping to improve accuracy of the determining result and efficiency of obtaining the determining result.

In another possible implementation, according to the read/write condition of the read/write task, determining the target read/write type, includes: based on a proportion of write tasks among the plurality of read/write tasks, determining the target read/write type.

In the implementation, based solely on the proportion of the write task among the plurality of read/write tasks, the target read/write type is determined. Since the proportion of the write task among the plurality of read/write tasks may represent a ratio of the read task to the write task during a time period, determining the target read/write type based on the proportion of the write task not only ensures the accuracy of the determining result, but also helps to simplify the determining process, thereby improving the speed of obtaining the determining result.

In another possible implementation, based on the proportion of the write task among the plurality of read/write tasks, determining the target read/write type, includes: based on the proportion of the write task among the plurality of read/write tasks and a fluctuation of the proportion of the write task, determining the target read/write type.

In the implementation, the fluctuation of the proportion of the write task during the target time period may reflect the distribution of the write task in the different sub time-periods during the target time period. Therefore, by the fluctuation of the write task during the target time period, the proportion of the write task during the different time periods during the target time period may be analyzed. For example, in a case that the proportion of the write task fluctuates significantly during the target time period, the proportion of the write task varies significantly in the different time periods. Conversely, in a case that the proportion of the write task fluctuates slightly during the target time period, the quantity of the write task varies slightly during the different time periods. On this basis, in a case that the proportion of the write task fluctuates significantly during the target time period, and the proportion of the write task is small during most of time periods and large during only the few time periods, the read/write type of the read/write task processed by the solid state drive during most of the time is a read task. Therefore, by combination of the proportion of the write tasks and the fluctuation of the proportion of the write tasks, the read/write type of the read/write task processed by the solid state drive during the most of time during the time period may be analyzed. This allows for determining the target read/write type based on the read/write type of the read/write task processed by the solid state drive during most of the time, thereby helping to ensure the read/write performance of the solid state drive during most of the time.

In another possible implementation, based on the proportion of the write task among the plurality of read/write tasks and the fluctuation of the proportion of the write task during the target time period, determining the target read/write type, includes: in a case that the proportion of the write task among the plurality of read/write task is greater than or equal to a third threshold, and a fluctuation ratio of the proportion of the write task during the target time period is less than or equal to a fourth threshold, determining the target read/write type as a write task.

In the implementation, a specific implementation for determining the target read/write type is provided. In the implementation, based on a size relation between the proportion of the write task and the third threshold, and a size relation between the fluctuation ratio of the proportion of the write task and the fourth threshold, the target read/write type is determined. The determining process is simple and convenient, helping to improve the accuracy of the determining result and the efficiency of obtaining the determining result.

In another possible implementation, according to the read/write condition of the read/write task, determining the target read/write type, includes: based on the proportion of the read task among the plurality of read/write tasks and the proportion of the write task among the plurality of read/write tasks, determining the target read/write type.

In the implementation, determining the target read/write type based on the proportion of the read task and the proportion of the write task among the plurality of read/write tasks allows for a more comprehensive analysis of the proportion of the read task and the proportion of the write task among the plurality of read / write tasks, thereby helping to improve the accuracy of the determined target read/write type.

In another possible implementation, based on the proportion of the read task among the plurality of read/write tasks and the proportion of the write task among the plurality of read the write tasks, determining the target read/write type, includes: based on the proportion of the read task among the plurality of read/write tasks, the fluctuation of the proportion of the read task during the target time period, the proportion of the write task among the plurality of read/write tasks, and the fluctuation of the proportion of the write task during the target time period, determining the target read/write type.

In the implementation, based on the proportion of the read task among the plurality of read/write tasks, the fluctuation of the proportion of the read task during the target time period, the proportion of the write task, and the fluctuation of the proportion of the write task during the target time period, the target read/write type is determined. This allows for a more comprehensive analysis of the proportion of the read task, distribution of the read task in the different sub time-periods during the target time period, the proportion of the write task, and the distribution of the write task among the plurality of read /write tasks in the different sub time-periods during the target time period. This helps to improve the accuracy of the determined target read/write type.

In another possible implementation, according to the read/write condition of the read/write task, determining the target read/write type, includes: based on at least one of a proportion of a random read task among the plurality of read/write tasks, a proportion of a sequential read task among the plurality of read/write tasks, a proportion of a random write task among the plurality of read/write tasks, or a proportion of a sequential write task among the plurality of read/write tasks, determining the target read/write type.

In the implementation, since the proportion may indicate a quantity of the random read task, random write task, sequential read task, and sequential write task during a time period, determining the target read/write type based on the at least one of the proportion of the random read task among the plurality of read/write tasks, the proportion of the sequential read task among the plurality of read/write tasks, the proportion of the random write task among the plurality of read/write tasks, or the proportion of the sequential write task among the plurality of read/write tasks, not only ensures the accuracy of the determining result, but also helps to simplify the determining process, thereby improving the speed of obtaining the determining result.

In another possible implementation, based on at least one of the proportion of the random read task among the plurality of read/write tasks, the proportion of the sequential read task among the plurality of read/write tasks, determining the target read/write type, includes: based on at least one of the proportion of the random read task among the plurality of read/write tasks, a fluctuation of the proportion of the random read task during the target time period, the proportion of the sequential read task among the plurality of read/write tasks, a fluctuation of the proportion of the sequential read task during the target time period, the proportion of the random write task among the plurality of the read/write tasks, a fluctuation of the proportion of the random write task during the target time period, the proportion of the sequential write task among the plurality of read/write tasks, or a fluctuation of the proportion of the sequential write task during the target time period, determining the target read/write type.

In the implementation, since the fluctuation of the proportion during the target time period may reflect distribution of a quantity of the random read task, the random write task, the sequential read task, and the sequential write task in different sub time-periods during the target time period, determining the target read/write type by combining the proportion and the fluctuation of the proportion during the target time period allows for the analysis of the read/write type of the read/write task processed by the solid state drive for most of the time during the time period. Thus, the target read/write type may be determined based on the read/write type of the read/write task executed by the solid state drive for most of the time, thereby helping to guarantee the read/write performance of the solid state drive for most of the time.

In another possible implementation, based on the proportion of the random read task among the plurality of the read/write tasks and the fluctuation of the proportion of the random read task during the target time period, determining the target read/write type, includes: in a case that the proportion of the random read task among the plurality of read/write tasks is greater than or equal to a fifth threshold, and a fluctuation ratio of the proportion of the random read task during the target time period is less than or equal to a sixth threshold, determining the target read/write type as the random read task.

In the implementation, based on a size relation between the proportion of the random read task and the fifth threshold, and a size relation between the fluctuation ratio of the proportion of the random read task and the sixth threshold, the target read/write type is determined. The determining process is simple and convenient, helping to improve the accuracy of the determining result and the efficiency of obtaining the determining result.

In another possible implementation, based on the proportion of the sequential read task among the plurality of the read/write tasks and the fluctuation of the proportion of the sequential read task during the target time period, determining the target read/write type, includes: in a case that the proportion of the sequential read task among the plurality of read/write tasks is greater than or equal to a seventh threshold, and the fluctuation ratio of the proportion of the sequential read task during the target time period is less than or equal to an eighth threshold, determining the target read/write type as the sequential read task.

In the implementation, based on a size relation between the proportion of the sequential read task and the seventh threshold, and a size relation between the fluctuation ratio of the proportion of the sequential read task and the eighth threshold, the target read/write type is determined. The determining process is simple and convenient, helping to improve the accuracy of the determining result and the efficiency of obtaining the determining result.

In another possible implementation, based on the proportion of the random write task among the plurality of the read/write tasks and the fluctuation of the proportion of the random write task during the target time period, determining the target read/write type, includes: in a case that the proportion of the random write task among the plurality of read/write tasks is greater than or equal to a ninth threshold, and the fluctuation ratio of the proportion of the random write task during the target time period is less than or equal to a tenth threshold, determining the target read/write type as the random write task.

In the implementation, based on a size relation between the proportion of the random write task and the ninth threshold, and a size relation between the fluctuation ratio of the proportion of the random write task and the tenth threshold, the target read/write type is determined. The determining process is simple and convenient, helping to improve the accuracy of the determining result and the efficiency of obtaining the determining result.

In another possible implementation, based on the proportion of the sequential write task among the plurality of the read/write tasks and the fluctuation of the proportion of the sequential write task during the target time period, determining the target read/write type, includes: in a case that the proportion of the sequential write task among the plurality of read/write tasks is greater than or equal to an eleventh threshold, and the fluctuation ratio of the proportion of the sequential write task during the target time period is less than or equal to a twelfth threshold, determining the target read/write type as the sequential write task.

In the implementation, based on a size relation between the proportion of the sequential write task and the eleventh threshold, and a size relation between the fluctuation ratio of the proportion of the sequential write task and the twelfth threshold, the target read/write type is determined. The determining process is simple and convenient, helping to improve the accuracy of the determining result and the efficiency of obtaining the determining result.

In another possible implementation, determining the second FTL algorithm from the plurality of FTL algorithms, includes: based on a received target instruction, determining the second FTL algorithm from the plurality of FTL algorithms; where the target instruction indicates the second FTL algorithm.

In the implementation, a specific implementation for determining the second FTL algorithm is provided. In the implementation, the solid state drive may determine the second FTL algorithm from the plurality of FTL algorithms based on the received target instruction that indicates the second FTL algorithm. In this way, a user may achieve an update of an FTL algorithm used by the solid state drive by sending an instruction that indicates the FTL algorithm to the solid state drive. On this basis, when the user finds that a read/write task performed by the solid state drive during the time period does not match a first FTL algorithm currently used by the solid state drive, the user may send an instruction that indicates the second FTL algorithm to the solid state drive to control the solid state drive to enable the FTL algorithm that matches the read/write task performed during the time period, thereby improving the performance of the solid state drive.

In another possible implementation, the target instruction includes an identifier of the second FTL algorithm; and based on the received target instruction, determining the second FTL algorithm from the plurality of FTL algorithms, includes: based on the identifier of the second FTL algorithm, determining the second FTL algorithm from the plurality of FTL algorithms.

In the implementation, the target instruction includes the identifier of the second FTL algorithm, so that after receiving the target instruction, the solid state drive may determine the second FTL algorithm from the plurality of FTL algorithms directly based on the identifier of the second FTL algorithm, helping to improve the accuracy and speed of determining the second FTL algorithm.

In another possible implementation, the target instruction includes an identifier of the target read/write type; and based on the received target instruction, determining the second FTL algorithm is determined from the plurality of FTL algorithms, includes: based on the identifier of the target read/write type, determining the second FTL algorithm from the plurality of FTL algorithms.

In the implementation, the target instruction includes the identifier of the target read/write type. After receiving the target instruction, the solid state drive may select an FTL algorithm that matches the target read/write type from the plurality of FTL algorithms as the second FTL algorithm. In this way, without a need for understanding the FTL algorithm that matches the different read/write types, the user only needs to send a target instruction that may indicate the read/write type to the solid state drive to control the solid state drive to enable the FTL algorithm that matches the read/write task performed during the time period, which helps to improve the convenience and experience for the user.

In another possible implementation, the method further includes: when the solid state drive is restarted, based on the second FTL algorithm, generating a mapping table of a target logical address and a target physical address of the solid state drive; where the mapping table includes the target address mapping information, the target logical address is a logical address to which data has been written in the target solid state drive, and the target physical address is the physical address to which data has been written in a target solid state drive.

In the implementation, a specific implementation for controlling the solid state drive to enable the second FTL algorithm is provided. In the implementation, when the solid state drive is restarted, a mapping relationship between a logical address and a physical address is generated based on the second FTL algorithm, where the logical address and the physical address have been used by the solid state drive. In this way, after the read/write task is received, the target address mapping information determined based on the second FTL algorithm may be enabled, which may improve a search speed and shorten a search time, and further contribute to reducing time of executing the read/write task, thereby improving the read/write performance when the read/write task is executed by the solid state drive.

In another possible implementation, the method further includes: in a case that a quantity of the read/write task received during a recent time period is less than or equal to a preset value, restarting the solid state drive.

In the implementation, in a case that the quantity of the read/write task received during the recent time period is less than or equal to the preset value, the solid state drive is restarted. This allows the solid state drive to be restarted during the window when the solid state drive is waiting for the read/write task, which helps to reduce the impact on the read/write task to be executed by the solid state drive when the FTL algorithm of the solid state drive is updated.

In a second aspect, an apparatus for determining a flash translation layer algorithm is provided. The apparatus includes functional units for implementing any one method as described in the first aspect, where an action by each functional unit is implemented by hardware or by the hardware executing corresponding software. For example, the apparatus for determining the flash translation layer algorithm may include: a processing unit, a determining unit, and a control unit. The processing unit is configured to determine address mapping information based on the first FTL algorithm during the time period, where the address mapping information is configured to indicate a correspondence between a logical address and a physical address of a solid state drive during a process of processing a read/write task. The determining unit is configured to determine a second FTL algorithm from a plurality of FTL algorithms, where performance of processing the read/write task during a time period based on the second FTL algorithm is higher than performance of processing the read/write task during the time period based on the first FTL algorithm. The control unit is configured to control the solid state drive to enable target address mapping information determined based on the second FTL algorithm.

In a third aspect, a solid state drive is provided. The solid state drive includes: a control chip and a flash memory chip. The flash memory chip is configured to store data. The control chip is configured to determine address mapping information based on a first FTL algorithm during a time period, where the address mapping information is configured to indicate a correspondence between a logical address and a physical address of the solid state drive during a process of processing a read/write task. The control chip is further configured to determine a second FTL algorithm from a plurality of FTL algorithms, where performance of processing the read/write task during a time period based on the second FTL algorithm is higher than performance of processing the read/write task during the time period based on the first FTL algorithm. The control chip is further configured to control the solid state drive to enable target address mapping information determined based on the second FTL algorithm.

It should be noted that, in the third aspect, the control chip may further be configured to perform any one possible implementation in the first aspect mentioned above.

In a fourth aspect, a computer device is provided. The computer device includes: the solid state drive described in the third aspect.

In a fifth aspect, a computer device is provided, including: a processor and a memory connected to the processor. The memory is configured to store a computer-executable instruction, and the processor executes the computer-executable instruction stored in the memory, to implement any one method as described in the first aspect.

In a sixth aspect, a chip is provided, where the chip includes a processor and an interface circuit, the interface circuit is configured to receive an instruction code and transmit the instruction code to the processor, and the processor is configured to run an instruction code to perform any one method as described in the first aspect.

In a seventh aspect, a computer-readable storage medium storing a computer-executable instruction is provided. When the computer-executable instruction runs on a computer, the computer is enabled to perform any one method as described in the first aspect.

In an eighth aspect, a computer program product including a computer-executable instruction is provided. When the computer-executable instruction runs on the computer, the computer is enabled to perform any one method as described in the first aspect.

For technical effects brought by any one implementation in the second aspect to the eighth aspect, reference may be made to technical effects brought by different implementations in the first aspect, which are not repeated here.

### BRIEF DESCRIPTION OF DRAWINGS

FIG. 1 is an architectural diagram of a computer device according to an embodiment of the present application;
FIG. 2 is a schematic diagram of a structure of a solid state drive according to an embodiment of the present application;
FIG. 3 is a flowchart of determining an FTL algorithm according to an embodiment of the present application;
FIG. 4 is another flowchart of determining an FTL algorithm according to an embodiment of the present application;
FIG. 5 is another flowchart of determining an FTL algorithm according to an embodiment of the present application;
FIG. 6 is another flowchart of determining an FTL algorithm according to an embodiment of the present application;
FIG. 7 is another flowchart of determining an FTL algorithm according to an embodiment of the present application; and
FIG. 8 is a schematic diagram of an apparatus for determining an FTL algorithm according to an embodiment of the present application.

### DESCRIPTION OF EMBODIMENTS

The following describes technical solutions in embodiments of the present application with reference to accompanying drawings in the embodiments of the present application.

In descriptions of the present application, unless otherwise specified, "/" means an "or" relationship between associated objects. For example, A/B may represent A or B. In the specification, "and/or" in the application describes only an association relationship between associated objects, and represents that three relationships may exist. For example, A and/or B may represent the following three cases: Only A exists, both A and B exist, and only B exists, where A and B can be singular or plural.

Furthermore, unless otherwise specified in the descriptions of the present application, "a plurality of" represents two or more. "at least one" or similar expressions represent any combination of these items, including any combination of single or plural items. For example, at least one of a, b, or c may represent a, b, c, a and b, a and c, b and c, or a, b, and c, where each of a, b, and c may be singular or plural.

In addition, for convenience of describing the technical solutions in the embodiments of the present application, in the embodiments of the present application, words such as "first", "second" and the like are used to differentiate between identical or similar items that have basically the same functions and purposes. A person skilled in the art will understand that words like "first" or "second" do not limit a quantity or an execution order, and words such as "first" and "second" do not mean being definitely different. Besides, in the embodiments of the present application, the terms "exemplary" or "for example" are used to mean examples, illustrations, or descriptions. Any embodiment or design described in the embodiments of the present application as "exemplary" or "for example" should not be explained as being preferred or advantageous compared to other embodiments or designs. Rather, the use of the words "exemplary" or "for example" is intended to present related concepts in a specific manner for ease of understanding.

First, an example introduction to application scenarios of the embodiments of the present application is provided.

Currently, when a read/write task is sent by a computer device to a solid state drive, a logical address (logical block address, LBA) determined based on a capacity of the drive is used. However, when the solid state drive reads and writes data, a physical address of the solid state drive is used. A mapping table of the logical address and the physical address is managed by using a flash translation layer (flash translation layer, FTL) algorithm.

In the related art, only one FTL algorithm is stored in the solid state drive. When the solid state drive is started for the first time, the mapping table based on the FTL algorithm is generated. Afterward, the solid state drive keeps maintaining the mapping table between the logical address and the physical address based on the FTL algorithm.

Since structures of mapping tables generated by different FTL algorithms are different, duration required for different FTL algorithms to query the physical address corresponding to the logical address is significantly different. For example, some FTL algorithms generate only one mapping table, and the physical address corresponding to the logical address may be determined by querying the mapping table. A mapping table generated by some other FTL algorithms includes an index table and an address table, and the physical address corresponding to the logical address may be determined by combining the index table and the address table. A mapping table generated by yet some other FTL algorithms includes a sub-table and a main table. When the physical address corresponding to the logical address fails to be queried in the sub-table, the main table needs to be queried for the physical address corresponding to the logical address. As a result, there are significant differences in duration required for executing the read or write task by different FTL algorithms, where the duration required for executing the read/write task is a critical metric for measuring read/write performance of the solid state drive.

Therefore, based on an approach in the related technology, when a fixed FTL algorithm used in the solid state drive does not match the read/write type of the read/write task executed by the solid state drive, the read/write performance of the solid state drive will be severely affected.

On this basis, the embodiments of the present application propose a method for determining an FTL algorithm. A plurality of FTL algorithms include a first FTL algorithm. The solid state drive determines address mapping information based on the first FTL algorithm during the time period, to indicate a correspondence between the logical address and the physical address of the solid state drive during a process of processing the read/write task during the time period. Afterward, the solid state drive determines a second FTL algorithm from the plurality of FTL algorithms, and enables target address mapping information determined based on the second FTL algorithm, where the target address mapping information is used to indicate the correspondence between the logical address and the physical address of the solid state drive during a process of processing the read/write task in a subsequent time period. Since a read/write task processed by the solid state drive during a relatively long time period is typically of a same type, and the performance of processing the read/write task during the time period based on the second FTL algorithm is higher than the performance of processing the read/write task during the time period based on the first FTL algorithm, the solid state drive enables the target address mapping information determined based on the second FTL algorithm, which helps to improve the read/write efficiency when a read/write task is processed in the subsequent time period, thereby contributing to enhancing the read/write performance of the solid state drive.

In addition, the performance of processing the read/write task during the time period based on the second FTL algorithm is higher than the performance of processing the read/write task during the time period based on the first FTL algorithm, which indicates that the second FTL algorithm better matches the solid state drive for the read/write task during the time period. Using the second FTL algorithm that better matches the read/write task during the time period further helps to extend a lifespan of the solid state drive.

Second, an example introduction to a system architecture of the embodiments of the present application is provided.

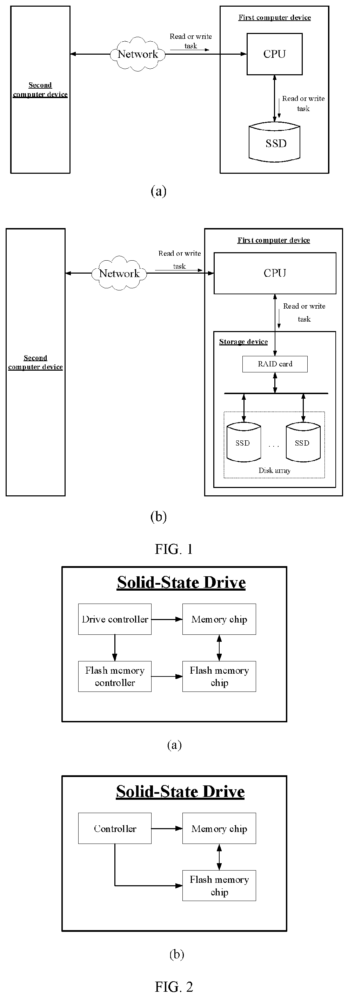

FIG. 1 (a) is an architectural diagram of a first computer device according to an embodiment of the present application. The first computer device includes a central processing unit (central processing unit, CPU) and a solid state drive. The CPU is configured to receive a read/write task sent by a second computer device and to send the received read/write task to the solid state drive. The solid state drive is configured to store data, receive the read/write task sent by the CPU, and execute the read/write task based on the FTL algorithm.

Optionally, the first computer device may be connected to the second computer device via a wired network or a wireless network, or by a communication bus.

FIG. 1 (b) is an architectural diagram of another first computer device according to an embodiment of the present application. The computer device includes a CPU and a storage device. The storage device includes a disk array (redundant array of independent disks, RAID), consisting of a plurality of solid state drives, and a RAID card. The CPU is configured to receive a read/write task sent by a second computer device and send the read/write task to the RAID card. The RAID card then sends the received read/write task to a solid state drive indicated by the read/write task. The solid state drive is configured to store data, receive the read/write task sent by the RAID card, and execute the read/write task based on the FTL algorithm.

It should be noted that a principle of executing the read/write task based on the FTL algorithm by the solid state drive in FIG. 1 (a) is same as a principle of executing the read/write task based on the FTL algorithm by the solid state drive in FIG. 1 (b).

FIG. 2 (a) is a schematic diagram of a structure of the solid state drive in FIG. 1 (a) and FIG. 1 (b). The solid state drive includes a drive controller, a flash memory controller, a flash memory chip, and a memory chip.

The flash memory chip is configured to store data indicated by the read/write task, a plurality of FTL algorithms, a mapping table, etc. The mapping table includes address mapping information that indicates a correspondence between a logical address and a physical address of the solid state drive. The memory chip is configured to cache the mapping table, etc. The drive controller is configured to receive the read/write task and execute the read/write task based on an FTL algorithm. The flash memory controller is configured to read data from the flash memory chip, write data in the flash memory chip, and write the mapping table from the memory chip to the flash memory chip, etc.

When the solid state drive is powered on for the first time, the drive controller runs an FTL algorithm in the flash memory chip and generates a mapping table based on the FTL algorithm. Then, the drive controller stores the mapping table in the memory chip and directs the flash memory controller to write the mapping table from the memory chip to the flash memory chip.

When the solid state drive is powered off, the flash memory controller writes the data from the memory chip back to the flash memory chip.

When the solid state drive is powered on not for the first time, the flash memory controller writes the mapping table from the flash memory chip to the memory chip, so that the drive controller may query the mapping table from the memory chip after receiving the read/write task.

The drive controller receives the read/write task sent by the CPU and, based on the running FTL algorithm, queries the physical address corresponding to the logical address indicated by the read/write task from the mapping table in the memory chip. When the read/write task is a read task, the drive controller sends the queried physical address to the flash memory controller, and the flash memory controller reads data from the flash memory chip based on the physical address. When the read/write task is a write task, the drive controller sends the physical address and data to be written to the flash memory controller, and the flash memory controller writes the data to be written to the flash memory chip based on the physical address.

FIG. 2 (b) is another schematic diagram of a structure of the solid state drive in FIG. 1 (a) and FIG. 1 (b). The solid state drive includes a controller, the flash memory chip, and the memory chip. For descriptions of the flash memory chip and the memory chip, reference may be made to the descriptions of the flash memory chip and the memory chip in above embodiments, which are not repeated here.

The controller receives the read/write task sent by the CPU and, based on the FTL algorithm, queries the physical address corresponding to the logic address indicated by the read/write task from the mapping table in the memory chip. When the read/write task is a read task, the controller reads the data from the flash memory chip based on the physical address. When the read/write task is a write task, the controller writes the data to be written to a physical location indicated by the physical address.

It should be noted that the controller shown in FIG. 2 (b) may be considered as the controller obtained by integration of the drive controller and the flash memory controller in FIG. 2 (a).

Optionally, the flash memory chip may be a non-volatile memory (non-volatile memory, NVM), such as NOR flash (NOR flash) or NAND flash (NAND flash).

Optionally, the memory chip may be a random access memory (random access memory, RAM), such as a dynamic random access memory (dynamic random access memory, DRAM), a static random access memory (static random access memory, SRAM), etc.

It should be noted that the system architecture and application scenarios described in the embodiments of the present application are intended to illustrate the technical solutions of the embodiments of the present application more clearly, and do not constitute a limitation on the technical solution according to the embodiments of the present application. A person of ordinary skills in the art may understand that as the system architecture evolves and new service scenarios emerge, the technical solutions according to the embodiments of the present application are equally applicable to similar technical issues.

For ease of understanding, the following is an illustrative introduction to a method for determining the FTL algorithm according to the present application, in combination with the accompanying drawings. The method is applicable to the solid state drive in FIG. 1 (a), FIG. 1 (b), FIG. 2 (a), and FIG. 2 (b).

It should be noted that the method may be performed by the drive controller in FIG. 2 (a) or by the controller in FIG. 2 (b).

The following is an introduction to the embodiments of the present application by using the method being executed by the drive controller for example.

Following embodiments of the present application will illustratively introduce the scheme for determining the FTL algorithm in five parts.

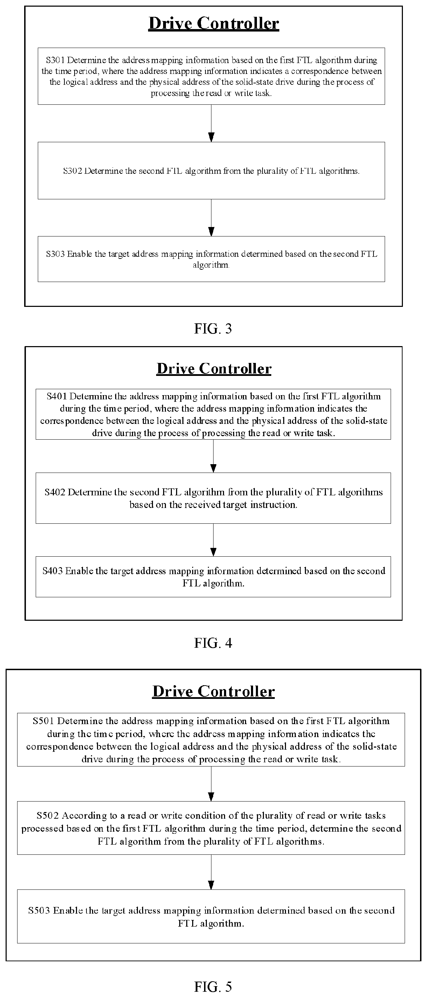

A first part, in combination with FIG. 3, introduces a process of determining the second FTL algorithm from the plurality of FTL algorithms and controlling the solid state drive to enable the second FTL algorithm.

A second part, in combination with FIG. 4, introduces a specific implementation for determining the second FTL algorithm from the plurality of FTL algorithms in the first part, and specifically, a process by which the drive controller determines the second FTL algorithm based on a received target instruction.

A third part, in combination with FIG. 5, introduces another specific implementation for determining the second FTL algorithm from the plurality of FTL algorithms in the first part, and specifically, a process by which the drive controller determines the second FTL algorithm according to the read/write condition of the plurality of read/write tasks processed based on the first FTL algorithm during the time period.

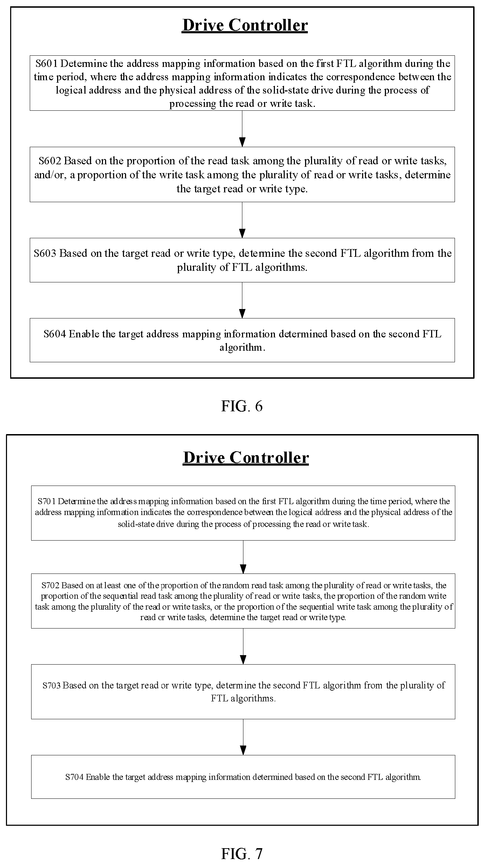

A fourth part, in combination with FIG. 6, introduces a specific implementation in the third part. In the implementation, a read/write type of the read/write task processed during the time period is categorized into a read task and a write task.

A fifth part, in combination with FIG. 7, introduces another specific implementation in the third part. In the implementation, the read/write type of the read/write task processed during the time period is categorized into a random read task, a random write task, a sequential read task, and a sequential write task.

FIG. 3 is a flowchart of a method for determining an FTL algorithm according to an example embodiment. For example, the method includes S301 to S303.

In some embodiments, the plurality of FTL algorithms are stored in the solid state drive. The plurality of FTL algorithms include the first FTL algorithm and the second FTL algorithm.

S301: The drive controller determines the address mapping information based on the first FTL algorithm during the time period, where the address mapping information is configured to indicate a correspondence between the logical address and the physical address of the solid state drive during the process of processing the read/write task.

In some embodiments, after the solid state drive is powered on, the drive controller enables the first FTL algorithm in the flash memory chip and stores a first mapping table generated based on the first FTL algorithm in the memory chip. Afterward, when receiving the read/write task during the time period, based on the address mapping information in the first mapping table, the drive controller determines the physical address corresponding to the logical address in the read/write task received during the time period.

It should be noted that a specific duration of the time period is not limited in the embodiment of the present application, for example, 24 hours, 48 hours, etc.

S302: The drive controller determines the second FTL algorithm from the plurality of FTL algorithms.

Performance of the drive controller in executing the read/write task during the time period based on the second FTL algorithm is higher than performance of the drive controller in processing the read/write task during the time period based on the first FTL algorithm.

Alternatively, it may be considered that read/write efficiency (or a read/write duration) of the drive controller in executing the read/write task by during the time period based on the second FTL algorithm is higher than read/write efficiency (or a read/write duration) of the drive controller in executing the read/write task during the time period based on the first FTL algorithm.

In some embodiments, the drive controller, determines the second FTL algorithm from the plurality of FTL algorithms based on the received target instruction, where the target instruction indicates the second FTL algorithm. Specific implementation of the embodiment will be described in subsequent embodiments. For details, reference may be made to the second part of the embodiments of the present application, that is, the embodiment shown in FIG. 4, which will not be detailed here.

In some other embodiments, the drive controller, according to the read/write condition of the plurality of read/write tasks processed based on the first FTL algorithm during the time period, determines the second FTL algorithm from the plurality of FTL algorithms. Specific implementation of the embodiment will be described in subsequent embodiments. For details, reference may be made to the third part of the embodiments of the present application, that is, the embodiment shown in FIG. 5, which will not be detailed here.

For example, the drive controller, based on a preset period, according to the read/write condition of the plurality of read/write tasks processed based on the first FTL algorithm during the time period before a start time of each execution period, determines the second FTL algorithm from the plurality of FTL algorithms.

It should be noted that a specific duration of the preset period is not limited in the embodiment of the present application. For example, the preset period may be 24 hours, 48 hours, etc.

It should be noted that, based on a type of the second FTL algorithm and a read/write type of the plurality of read/write tasks during the time period, whether the read/write performance of the drive controller in executing the plurality of read/write tasks during the time period based on the second FTL algorithm is higher than the read/write performance of the drive controller in executing the plurality of read/write tasks during a time period based on the first FTL algorithm may be determined. In other words, the read/write performance of the drive controller in executing the plurality of read/write tasks during the time period based on the second FTL algorithm does not need to be compared with the read/write performance of the drive controller in executing the plurality of read/write tasks during a time period based on the first FTL algorithm.

S303: The drive controller enables the target address mapping information determined based on the second FTL algorithm.

In this case, the drive controller enabling the target address mapping information determined based on the second FTL algorithm indicates that the drive controller executes the received read/write task based on the target address mapping information determined by the second FTL algorithm.

Optionally, the method further includes: in a case that a quantity of the read/write task received during a recent time period is less than or equal to a preset value, restarting the solid state drive.

In some embodiments, in a case that the drive controller detects that the quantity of the read/write task received during the recent period is small, and is less than or equal to the preset value, the drive controller restarts the solid state drive.

It should be noted that a specific duration of the recent time period is not limited in the embodiment of the present application. For example, it may be 10 minutes, 20 minutes, 30 minutes, etc., and the specific duration may be dynamically determined based on an actual condition.

It should be noted that a specific value of the preset value is not limited in the embodiment of the present application, and the preset value may be dynamically determined based on the actual condition.

Optionally, the method further includes: when the solid state drive is restarted, based on the second FTL algorithm, generating a mapping table of a target logical address and a target physical address of the solid state drive.

The mapping table includes the target address mapping information, the target logical address is a logical address to which data has been written in the target solid state drive, and the target physical address is a physical address to which data has been written in the target solid state drive.

In some embodiments, when the solid state drive is restarted, the drive controller, based on the second FTL algorithm stored in the flash memory chip, generates a mapping table of the target logical address and the target physical address, and updates an old mapping table in the memory chip to a newly generated mapping table. Afterward, the drive controller instructs the flash memory controller to write an updated mapping table from the memory chip back to the flash memory chip.

Optionally, the method further includes: when an FTL algorithm corresponding to a history mapping table of the flash memory chip is different from the second FTL algorithm, based on the second FTL algorithm, generating the mapping table between the target logical address of the solid state drive and the target physical address of the solid state drive.

In some embodiments, whether the FTL algorithm corresponding to the history mapping table stored in the flash memory chip is same as the second FTL algorithm is determined, and when the FTL algorithm corresponding to the history mapping table of the flash memory chip is different from the second FTL algorithm, a new mapping table is generated based on the second FTL algorithm, which helps to avoid repeated generation of a mapping table with a same structure.

Optionally, S303 specifically includes: the drive controller executing the received read/write task based on the target address mapping information determined based on the second FTL algorithm.

The read/write performance of the drive controller in executing the target read/write task based on the target address mapping information determined based on the second FTL algorithm is higher than the read/write performance of the drive controller in executing the target read/write task based on the first FTL algorithm.

A read/write type of the target read/write task is same as a target read/write type determined in following embodiments.

In some embodiments, the first computer device receives a target read/write task sent by the second computer device, and sends the target read/write task to the drive controller of the solid state drive.

In some embodiments, the target read/write task is specifically a read task. Based on this, the target read/write task includes a logic address 1 of data to be read. In some other embodiments, the target read/write task is specifically a write task. Based on this, the target read/write task includes data to be written and a logical address 2 to which the data to be written will be written.

When the target read/write task is specifically a read task, the drive controller queries a physical address 1 corresponding to a logical address 1 in target address mapping information 1 from the mapping table generated based on the second FTL algorithm. Afterward, the drive controller sends the physical address 1 to the flash memory controller and instructs the flash memory controller to read data stored at the physical address 1 from the flash memory chip.

When the target read/write task is specifically a write task, the drive controller queries a physical address 2 corresponding to a logical address 2 in target address mapping information 2 from the mapping table generated based on the second FTL algorithm. Afterward, the drive controller sends the physical address 2 and data to be written carried by the write task to the flash memory controller and instructs the flash memory controller to write the data to be written to the flash memory chip based on the physical address 2.

In above embodiments, the plurality of FTL algorithms are pre-stored in the solid state drive, where the plurality of FTL algorithms include the first FTL algorithm. The solid state drive determines the address mapping information based on the first FTL algorithm during the time period, to indicate the correspondence between the logical address and the physical address of the solid state drive during the processing of the read/write task during the time period. Then, the solid state drive determines the second FTL algorithm from the plurality of FTL algorithms, and enables the target address mapping information determined based on the second FTL algorithm to indicate a correspondence between the logical address and the physical address of the solid state drive during a process of processing the read/write task in a subsequent time period. Since the read/write task processed by the solid state drive during a relatively long time period is typically of a same type, and the performance of processing the read/write task during the time period based on the second FTL algorithm is higher than the performance of processing the read/write task during the time period based on the first FTL algorithm, the solid state drive enables the target address mapping information determined based on the second FTL algorithm, which helps to improve the read/write efficiency when the read/write task is processed in the subsequent time period, thereby contributing to enhancing the read/write performance of the solid state drive.

In addition, the performance of processing the read/write task during the time period based on the second FTL algorithm is higher than the performance of processing the read/write task during the time period based on the first FTL algorithm, which indicates that the second FTL algorithm better matches the solid state drive for the read/write task during the time period. Using the second FTL algorithm that better matches the read/write task during the time period further helps to extend a lifespan of the solid state drive.

The above is the first part of the embodiments of the present application. The following, in combination with FIG. 4, introduces the second part of the embodiments of the present application, and specifically, a specific implementation method of S302.

FIG. 4 is a flowchart of a method for determining an FTL algorithm according to an example embodiment. For example, the method includes S401 to S403.

S401: Reference may be made to the above S301.

S402: The drive controller determines the second FTL algorithm from the plurality of FTL algorithms based on the received target instruction.

The target instruction indicates the second FTL algorithm.

In some embodiments, a user sends the target instruction to the first computer device by a computer device, for example, by the second computer device, or by other computer devices besides the first computer device and the second computer device. After receiving the target instruction, the CPU of the first computer device sends the target instruction to the drive controller. After receiving the target instruction, based on content of the target instruction, the drive controller determines the second FTL algorithm from the plurality of FTL algorithms.

Optionally, the target instruction includes an identifier of the second FTL algorithm.

S402 specifically includes: based on the identifier of the second FTL algorithm, determining the second FTL algorithm from the plurality of FTL algorithms.

The identifier of the FTL algorithm corresponds to the FTL algorithm one to one, that is, different FTL algorithms have different identifiers. For example, the identifier may be a name of the FTL algorithm, such as a BAN algorithm, a DFTL algorithm, a FAST algorithm, etc.

In some embodiments, after receiving the target instruction, the drive controller determines an algorithm with the identifier as the second FTL algorithm from the plurality of FTL algorithms.

Optionally, the target instruction includes an identifier of the target read/write type, where the target read/write type is a read/write type determined based on the plurality of read/write tasks processed based on the first FTL algorithm.

In the embodiment, the target read/write type may be determined by a person or by a user based on the computer device, which is not limited in the embodiment of the present application.

S402 specifically includes: based on the identifier of the target read/write type, determining the second FTL algorithm from the plurality of FTL algorithms.

The identifier of the read/write type corresponds to the read/write type one to one, that is, different read/write types have different identifiers. For example, the identifier may be a name of the read/write type, such as a read task, a write task, a sequential read task, a random read task, etc.

In some embodiments, a plurality of correspondences between a plurality of read/write types and the plurality of FTL algorithms are pre-stored in the memory chip or the flash memory chip. For example, the write task corresponds to the DFTL algorithm, the read task corresponds to the BAN algorithm, etc. After receiving the target instruction, the drive controller determines a target correspondence from the plurality of correspondences, where the target correspondence includes the identifier of the target read/write type, and determines an FTL algorithm in the target correspondence as the second FTL algorithm.

S403: Reference may be made to the above S303.

In the above embodiments, the solid state drive may determine the second FTL algorithm from the plurality of FTL algorithms based on the received target instruction that indicates the second FTL algorithm. In this way, the user may achieve an update of the FTL algorithm used by the solid state drive by sending an instruction that indicates the FTL algorithm to the solid state drive. On this basis, when the user finds that the read/write task performed by the solid state drive during the time period does not match the first FTL algorithm currently used by the solid state drive, the user may send an instruction that indicates the second FTL algorithm to the solid state drive to control the solid state drive to enable the FTL algorithm that matches the read/write task performed during the time period , thereby improving the performance of the solid state drive.

The above is the second part of the embodiments of the present application. The following, in conjunction with FIG. 5, introduces the third part of the embodiments of the present application, and specifically, another specific implementation method of S301.

FIG. 5 is another flowchart of a method for determining an FTL algorithm according to an example embodiment of the present application. For example, the method includes S501 to S503.

S501: Reference may be made to the above S301.

S502: According to a read/write condition of the plurality of read/write tasks processed based on the first FTL algorithm during the time period, the drive controller determines the second FTL algorithm from the plurality of FTL algorithms.

Optionally, the read/write condition includes a read/write type, read/write proportion of the different read/write types, etc.

In a categorization method, the read/write type includes a read task and a write task. In another categorization method, the read/write type includes a sequential read task, a sequential write task, a random write task, and a random read task.

Optionally, S502 specifically includes the following S502a to S502b.

S502a: According to the read/write condition of the plurality of read/write tasks processed based on the first FTL algorithm during the time period, determine the target read/write type.

In some embodiments, based on the proportions of the different read/write types in the plurality of read/write tasks, the drive controller determines the target read/write type. A specific implementation of the embodiment will be detailed in subsequent embodiments, specifically in S602 and S702, and will not be detailed here.

In some other embodiments, based on the proportions of the different read/write types in the plurality of read/write tasks and fluctuation of the proportions of the different read/write types during a target time period, the drive controller determines the target read/write type. A specific implementation of the embodiment will be detailed in subsequent embodiments, specifically in S602 and S702, and will not be detailed here.

Optionally, the read/write type of the target read/write task may be a read task or a write task. By categorization of the target read/write type into the read task and the write task, the plurality of FTL algorithms only need to include an FTL algorithm that matches the read task and an FTL algorithm that matches the write task. This helps to reduce a quantity of an FTL algorithm that the solid state drive needs to store, thereby helping to reduce storage space occupied by the FTL algorithms. In addition, this helps to reduce duration required to traverse the plurality of FTL algorithms, thereby improving a speed of determining the second FTL algorithm that matches the target read/write type from the plurality of FTL algorithms.

Optionally, the target read/write type may be a random read task, a random write task, a sequential read task, or a sequential write task. The target read/write type is categorized into four types: a sequential read task, a sequential write task, a random write task, and a random read task, which improves accuracy of categorizing the read/write type and thus enhances accuracy of the read/write type. This enables better matching between the second FTL algorithm and the target read/write type, thereby helping to improve the performance of processing the read/write task during the time period based on the second FTL algorithm.

S502b: Based on the target read/write type, determine the second FTL algorithm from the plurality of FTL algorithms.

In some embodiments, the plurality of correspondences between the plurality of read/write types and the plurality of FTL algorithms are pre-stored in the memory chip or the flash memory chip. For example, the write task corresponds to the DFTL algorithm, the read task corresponds to the BAN algorithm, etc. After determining the target read/write type, the drive controller determines the target correspondence from the plurality of correspondences, where the target correspondence includes the target read/write type, and determines the FTL algorithm in the target correspondence as the second FTL algorithm.

Optionally, in a case that the target read/write type is the write task, the DFTL algorithm is determined as the second FTL algorithm from the plurality of FTL algorithms. In a case that the target read/write type is the read task, the BAN algorithm is determined as the second FTL algorithm from the plurality of FTL algorithms.

Optionally, in a case that the target read/write type is the random read task or the sequential read task, the BAN algorithm is determined as the second FTL algorithm from the plurality of FTL algorithms. In a case that the target read/write type is the random write task, the DFTL algorithm is determined as the second FTL algorithm from the plurality of FTL algorithms. In a case that the target read/write type is the sequential write task, the FAST algorithm is determined as the second FTL algorithm from the plurality of FTL algorithms.

S503: Reference may be made to the above S303.

In the above embodiments, according to the plurality of read/write tasks processed based on the first FTL algorithm during the time period, the solid state drive automatically selects the second FTL algorithm from the plurality of FTL algorithms. This allows the solid state drive to automatically update a used FTL algorithm without user participation, thus enhancing an easier FTL algorithm update.

The above is the third part of the embodiments of the present application. The following, in conjunction with FIG. 6, introduces the fourth part of the embodiments of the present application, and specifically, a specific implementation method of S502.

It should be noted that in the implementation, the read/write type of the read/write task includes a read task and a write task.

FIG. 6 is another flowchart of a method for determining an FTL algorithm according to an example embodiment of the present application. For example, the method includes S601 to S604.

S601: Reference may be made to the above S501.

S602: Based on a proportion of the read task among the plurality of read/write tasks, and/or, a proportion of the write task among the plurality of read/write tasks, determine the target read/write type.

The following provides an example illustration of various implementations of S602 by methods 1 to 3.

Method 1: Based on the proportion of the read task among the plurality of read/write tasks, the target read/write type is determined.

In some embodiments, based solely on the proportion of the read task among the plurality of read/write tasks, the drive controller may determine the target read/write type. Since the proportion of the read task among the plurality of read/write tasks may indicate a ratio of the read task to the write task during the time period, the target read/write type is determined based on the proportion of the read tasks, which may not only ensure accuracy of a determining result, but also help to simplify a determining process, thereby improving a speed of obtaining a determining result.

For example, in a case that the proportion of the read task among the plurality of read/write tasks is greater than a threshold *a*, it indicates that there are more read tasks among the plurality of read/write tasks. On this basis, the target read/write type may be determined as the read task. In a case that the proportion of the read tasks is less than the threshold *a*, there are fewer read tasks among the plurality of read/write tasks, that is, there are more write tasks. On this basis, the target read/write type may be determined as the write task.

In an example, the threshold *a* may be 50%. Since the read/write type of the read/write task is categorized into the read task or the write task, the read/write type of each read/write task among the plurality of read/write tasks is the read task or the write task. Setting the threshold *a* to 50% enables the accuracy.

In another example, the threshold *a* may also be greater than 50%, for example, 60%, 65%, etc. In a case that the read/write performance of the solid state drive during execution of a write task primarily needs to be ensured in a current scenario, the threshold *a* may be set to be greater than 50%, so as to improve the criteria for determining the target read/write type as the read task, thereby enhancing a probability of the target read/write type being determined as the write task, and thereby helping to ensure the read/write performance of the solid state drive during execution of the write task.

In some other embodiments, based on the proportion of the read task among the plurality of read/write tasks and the fluctuation of the proportion of the read task during the target time period, the drive controller may determine the target read/write type.

Duration of the target time period is less than or equal to duration of the time period.

For example, when the drive controller determines the target read/write type based on the plurality of read/write during the time period, the target time period may be the time period. For example, the current time is 16:00 on October 10, 2022, the plurality of read/write tasks during the time period are specifically a plurality of read/write tasks within 24 hours, that is, a plurality of read/write tasks between 16:00 on October 10, 2022, and 16:00 on October 9, 2022, and then the target time period is 24 hours between 16:00 on October 10, 2022 and 16:00 on October 9, 2022.

The fluctuation of the proportion of the read task during the target time period may reflect distribution of the read task in different sub time-periods during the target time period. Therefore, based on the fluctuation of the read task during the target time period, the proportion of the read task in different time periods during the target time period may be analyzed. For example, in a case that the proportion of the read task fluctuates significantly during the target time period, the proportion of the read task varies significantly during the different time periods. Conversely, in a case that the proportion of the read task fluctuates slightly during the target time period, the quantity of the read task varies slightly in the different time periods.

On this basis, in a case that the proportion of the read task fluctuates significantly during the target time period, and the proportion of the read task is small during most time periods and large during only a few time periods, the read/write type of the read/write task processed by the solid state drive during most of time is a write task. Therefore, by combining the proportion of the read task and the fluctuation of the proportion of the read task, the read/write type of the read/write task processed by the solid state drive during most of the time may be analyzed. This allows for determining the target read/write type based on the read/write type of the read/write task processed by the solid state drive during most of the time, thereby helping to ensure the read/write performance of the solid state drive during most of the time.

In an example, in a case that the proportion of the read task among the plurality of read/write tasks is greater than or equal to the first threshold, and a fluctuation ratio of the proportion of the read task during the target time period is less than or equal to a second threshold, the target read/write type is determined as the read task.

In another example, in a case that the proportion of the read task among the plurality of read/write tasks is less than the first threshold, and the fluctuation ratio of the proportion of the read tasks during the target time period is greater than the second threshold, the target read/write type is determined as the write task.

In another example, in a case that the proportion of the read task among the plurality of read/write tasks is less than the first threshold, and the fluctuation ratio of the proportion of the read task during the target time period is less than or equal to the second threshold, the target read/write type is determined as a write task.

In another example, in a case that the proportion of the read task among the plurality of read/write tasks is less than the first threshold, and the fluctuation ratio of the proportion of the read task during the target time period is greater than or equal to the second threshold, the target read/write type is determined as the write task.

In some embodiments, the target time period may be divided into a plurality of sub time-periods, and the fluctuation ratio of the proportion of the read task during the target time period is determined based on a difference value between proportions during any two sub time-periods.

For example, the proportion of the read task among the plurality of read/write tasks is *A,* and the target time period is divided into a time period 1, a time period 2, and a time period 3, where during the time period 1, the proportion of the read task is *A1,* during the time period 2, the proportion of the read task is *A2,* and during the time period 3, the proportion of the read task is *A3.* In a case that a difference value 1 between *A* and *A1,* a difference value 2 between *A* and *A2,* and a difference value 3 between A and *A3* are all less than or equal to the second threshold, the fluctuation of the proportion of the read task during the target time period is less than or equal to the second threshold. Otherwise, the fluctuation of the proportion of the read task during the target time period is greater than the second threshold.

It should be noted that duration of different sub-time periods may be equal or unequal, which is not limited in the embodiments of the present application.

It should be noted that specific values of the first threshold and the second threshold are not limited in the embodiments of the present application.

For example, the first threshold may be 70%, and the second threshold may be 10%, etc.

On this basis, in a case that the proportion of the read task in the plurality of read/write tasks is greater than or equal to 70%, and the fluctuation ratio of the proportion of the read task during the target time period is less than or equal to 10%, then the target read/write type is determined as a read task.

In the method 1, based solely on the proportion of the read task among the plurality of read/write tasks, the target read/write type is determined. Since the proportion of the read task among the plurality of read/write tasks may represent a ratio of the read task to the write task during the time period, determining the target read/write type based on the proportion of the read task not only ensures the accuracy of a determining result, but also helps to simplify a determining process, thereby improving a speed of the determining result.

Method 2: Based on the proportion of the write task among the plurality of read/write tasks, the target read/write type is determined.

In some embodiments, based solely on the proportion of the write task among the plurality of read/write tasks, the drive controller may determine the target read/write type.

In some other embodiments, based on the proportion of the write task among the plurality of read/write tasks and the fluctuation of the proportion of the write task during the target time period, the drive controller may determine the target read/write type.

In an example, in a case that the proportion of the write task among the plurality of read/write tasks is greater than or equal to a third threshold, and the fluctuation ratio of the proportion of the write task is less than or equal to a fourth threshold, the target read/write type is determined as the write task.

In another example, in a case that the proportion of the write task among the plurality of read/write tasks is less than the third threshold, and the fluctuation ratio of the proportion of the write task is greater than the fourth threshold, the target read/write type is determined as the read task.

In another example, in a case that the proportion of the write task among the plurality of read/write tasks is greater than or equal to the third threshold, and the fluctuation ratio of the proportion of the write task is greater than the fourth threshold, the target read/write type is determined as the read task.

In another example, in a case that the proportion of the write task among the plurality of read/write tasks is less than the third threshold, and the fluctuation ratio of the proportion of the write task is less than or equal to the fourth threshold, the target read/write type is determined as the read task.

It should be noted that the first threshold and the third threshold may be same or different, which is not limited in the embodiments of the present application. In addition, the embodiments of the present application do not limit whether the second threshold and the fourth threshold are same.

It should be noted that an implementation principle of the method 2 is same as an implementation principle of the method 1. Therefore, for an implementation process and related explanations of the method 2, reference may be made to an implementation process and related explanations of the above method 1, which will not be detailed here.

In the method 2, based solely on the proportion of the write task among the plurality of read/write tasks, the target read/write type is determined. Since the proportion of the write task among the plurality of read/write tasks may represent a ratio of the write task to the read task during the time period, determining the target read/write type based on the proportion of the write tasks not only ensures the accuracy of a determining result, but also helps to simplify a determining process, thereby improving a speed of obtaining the determining result.

Method 3: Based on the proportion of the read tasks among the plurality of read/write tasks and the proportion of the write tasks in the plurality of read/write tasks, the target read/write type is determined.

In some embodiments, based solely on the proportion of the read task and the proportion of the write task among the plurality of read/write tasks, the drive controller may determine the target read/write type.

Optionally, in a case that the proportion of the read task and the proportion of the write task are both less than a threshold b, and the proportion of the write task is greater than a threshold c, the target read/write type is determined as the write task.

Compared with the read task, the FTL algorithm has a greater impact on the read/write efficiency of the write task, so by setting the proportion of the read task and the proportion of the write task both to less than the threshold b, and the proportion of the write task to greater than the threshold *c*, determining the target read/write type as the write task may help to improve the read/write efficiency of the solid state drive during execution of the write task, thereby helping to improve overall read/write performance of the solid state drive.

It should be noted that specific numerical values of the threshold b and the threshold c are not limited in the embodiments of the present application. For example, the threshold b may be 60%, and the threshold c may be 50%.

In some other embodiments, based on the proportion of the read task among the plurality of tasks, the fluctuation of the proportion of the read task during the target time period, and the proportion of the write task, the drive controller may determine the target read/write type.

In some other embodiments, based on the proportion of the read task, the proportion of the write task, and the fluctuation of the proportion of the write task during the target time period among the plurality of tasks, the drive controller may determine the target read/write type.

In some other embodiments, based on the proportion of the read task among the plurality of the read/write tasks, the fluctuation of the proportion of the read task during the target time period, the proportion of the write task, and the fluctuation of the proportion of the write task during the target time period, the drive controller may determine the target read/write type.

It should be noted that an implementation principle of the method 3 is same as the implementation principle of the method 1. Therefore, for an implementation process and related explanations of the method 3, reference may be made to the implementation process and the related explanations of the above method 1, which will not be detailed here.

In the method 3, based on the proportion of the read task and the proportion of the write task among the plurality of read/write tasks, the target read/write type is determined. This allows for a more comprehensive analysis of the proportion of the read task and the proportion of the write task among the plurality of read the write tasks, thereby helping to improve the accuracy of the determined target read/write type.

S603: Based on the target read/write type, the drive controller determines the second FTL algorithm from the plurality of FTL algorithms.

It should be noted that an implementation principle of S603 is same as an implementation principle of S502b. Therefore, for an implementation process and relevant explanations of S603, reference may be made to an implementation process and relevant explanations of the above S502b, which will not be detailed here.

S604: Reference may be made to the above S503.

In the above embodiments, the read/write type of the read/write task is categorized into the read task and the write task. Thus, the plurality of FTL algorithms only need to include the FTL algorithm that matches the read task and the FTL algorithm that matches the write task. This helps to reduce a quantity of the FTL algorithm that the solid state drive needs to store, thereby helping to reduce the storage space occupied by the FTL algorithms. In addition, this helps to reduce a duration required to traverse the plurality of FTL algorithms, thereby improving the speed of determining the second FTL algorithm that matches the target read/write type from the plurality of FTL algorithms. In addition, since the proportion may reflect a quantity of the read task and the write task, determining the target read/write type based on the proportion of the read task among the plurality of read/write tasks, and/or, the proportion of the write task among the plurality of read/write tasks, not only ensures the accuracy of the determining result, but also simplifies the determining process, thereby accelerating an analysis.

The above is the fourth part of the embodiments of the present application. The following, in combination with FIG. 7, introduces the fifth part of the embodiments of the present application, and specifically, another specific implementation method of S502.

It should be noted that in the implementation, the read/write type of the read/write task includes a random read task, a random write task, a sequential read task, and a sequential write task.

FIG. 7 is another flowchart of a method for determining the FTL algorithms according to an example embodiment of the present application. For example, the method includes S701 to S704.

S701: Reference may be made to the above S601.

S702: Based on at least one of the proportion of the random read task among the plurality of read/write tasks, the proportion of the sequential read task among the plurality of read/write tasks, the proportion of the random write task among the plurality of the read/write tasks, and the proportion of the sequential write task among the plurality of read/write tasks, the drive controller determines the target read/write type.

The following provides an example illustration of various implementations of S702 by methods a to d.

It should be noted that the implementations of S702 are not limited to following implementations a to d. Other combinations of the proportion of the random read task, the proportion of the sequential read task, the proportion of the random write task, and the proportion of the sequential write task among the plurality of read/write tasks are also applicable to the embodiments of the present application. Since an implementation principle of other combinations is same as an implementation principle of the following implementations a to d, details are not repeated in the embodiments of the present application.

Implementation a: Based on the proportion of the random read task among the plurality of read/write tasks, the target read/write type is determined.

In some embodiments, based solely on the proportion of the random read task among the plurality of read/write tasks, the drive controller determines the target read/write type.

In some other embodiments, based on the proportion of the random read task among the plurality of read/write tasks and the fluctuation of the proportion of the random read task during the target time period, the drive controller determines the target read/write type.

For example, in a case that the proportion of the random read task among the plurality of read/write tasks is greater than or equal to the fifth threshold, and the fluctuation ratio of the proportion of the random read task during the target time period is less than or equal to the sixth threshold, the target read/write type is determined as the random read task.

It should be noted that an implementation principle of the above implementation a is same as the implementation principle of the implementation 1 in S602. Therefore, for an implementation process and related explanations of the above implementation a, reference may be made to the implementation process and the related explanations of the implementation 1 in S602, which will not be detailed here.

It should be noted that, based on the proportion of the sequential read task in the plurality of read/write tasks, the proportion of the random write task in the plurality of read/write tasks, and the proportion of the sequential write task in the plurality of read/write tasks, the target read/write type is determined, which is same as a principle of the above method a and are not repeated here. The following explains only differences:
Based on the proportion of the sequential read task among the plurality of the read/write tasks and the fluctuation of the proportion of the sequential read task during the target time period, determining the target read/write type, includes: in a case that the proportion of the sequential read task among the plurality of read/write tasks is greater than or equal to the seventh threshold, and the fluctuation ratio of the proportion of the sequential read task during the target time period is less than or equal to the eighth threshold, determining the target read/write type as the sequential read task.

Based on the proportion of the random write task among the plurality of the read/write tasks and the fluctuation of the proportion of the random write task during the target time period, determining the target read/write type, includes: in a case that the proportion of the random write task among the plurality of read/write tasks is greater than or equal to a ninth threshold, and the fluctuation ratio of the proportion of the random write task during the target time period is less than or equal to a tenth threshold, determining the target read/write type as the random write task.

Based on the proportion of the sequential write task among the plurality of the read/write tasks and the fluctuation of the proportion of the sequential write task during the target time period, determining the target read/write type, includes: in a case that the proportion of the sequential write tasks among the plurality of read/write task is greater than or equal to the eleventh threshold, and the fluctuation ratio of the proportion of the sequential write task during the target time period is less than or equal to the twelfth threshold, determining the target read/write type as the sequential write task.

Implementation b: Based on the proportion of the random read task and the proportion of the random write task in the plurality of read/write tasks, the target read/write type is determined.

In some embodiments, based solely on the proportion of the random read task and the proportion of the random write task among the plurality of read/write tasks, the drive controller may determine the target read/write type.

In some other embodiments, based on the proportion of the random read task among the plurality of read/write tasks, the fluctuation of the proportion of the random read task during the target time period, the proportion of the random write task among the plurality of read/write tasks, and the fluctuation of the proportion of random write task during the target time period, the drive controller may determine the target read/write type.

It should be noted that an implementation principle of the above implementation b is same as the implementation principle of the implementation 3 in S602. Therefore, for an implementation process and related explanations of the above implementation b, reference may be made to the implementation process and the related explanations of the implementation 3 in S602, which will not be detailed here.

Implementation c: Based on the proportion of the sequential read task and the proportion of the sequential write task among the plurality of read/write tasks, the target read/write type is determined.

In some embodiments, based solely on the proportion of the sequential read task and the proportion of the sequential write task among the plurality of read/write tasks, the drive controller may determine the target read/write type.

In some other embodiments, based on the proportion of the sequential read task among the plurality of read/write tasks, the fluctuation of the proportion of the sequential read task during the target time period, the proportion of the sequential write task among the plurality of read/write tasks, and the fluctuation of the proportion of the sequential write task during the target time period, the drive controller may determine the target read/write type.

It should be noted that an implementation principle of the above implementation c is same as the implementation principle of the implementation 3 in S602. Therefore, for an implementation process and related explanations of the above implementation c, reference may be made to the implementation process and the related explanations of the implementation 3 in S602, which will not be detailed here.

Method d: Based on the proportion of the random read task among the plurality of read/write tasks, the proportion of the sequential read task among the plurality of read/write tasks, the proportion of the random write task among the plurality of read/write tasks, and the proportion of the sequential write task among the plurality of read/write tasks, the target read/write type is determined.

In some embodiments, based solely on the proportion of the random read task among the plurality of read/write tasks, the proportion of the sequential read task among the plurality of read/write tasks, the proportion of the random write task among the plurality of read/write tasks, and the proportion of the sequential write task among the plurality of read/write tasks, the drive controller may determine the target read/write type.

In some other embodiments, based on the proportion of the random read task among the plurality of read/write tasks, the fluctuation of the proportion of the random read task during the target time period, the proportion of the sequential read task among the plurality of read/write tasks, the fluctuation of the proportion of the sequential read task during the target time period, the proportion of the random write task among the plurality of read/write tasks, the fluctuation of the proportion of the random write task during the target time period, the proportion of the sequential write task among the plurality of read/write tasks, and the fluctuation of the proportion of the sequential write task during the target time period, the drive controller may determine the target read/write type.

It should be noted that an implementation principle of the above implementation d is same as the implementation principle of the implementation 3 in S601. Therefore, for an implementation process and related explanations of the above implementation d, reference may be made to the implementation process and the related explanations of the implementation 3 in S601, which will not be detailed here.

S703-S704: Reference may be made to the above S603 to S604.

In the above embodiments, the read/write task is categorized into the sequential read task, the sequential write task, the random write task, and the random read task, which improves the accuracy of categorizing the read/write type. This enhances the accuracy of the read/write type, thereby enabling the better matching between the second FTL algorithm and the target read/write type, and helping to improve a read/write performance of executing the plurality of read/write tasks during the time period by the drive controller. In addition, since the proportion may reflect the quantity of the read task and the write task, determining the target read/write type based on the proportion of the random read task among the plurality of read/write tasks, the proportion of the sequential read task among the plurality of read/write tasks, the proportion of the random write task among the plurality of read/write tasks, and the proportion of the sequential write task among the plurality of read/write tasks not only ensures the accuracy of the determining result, but also simplifies the determining process, thereby accelerating the analysis.

The above mainly introduces the solutions provided by the embodiments of the present application from the perspective of methodology. To achieve the above functions, an apparatus for determining the FTL algorithm includes hardware structures and/or software modules that perform each function. It should be readily apparent to a person skilled in the art that the units and algorithm steps of various examples described with the embodiments disclosed herein may be implemented by hardware, or a combination of hardware and computer software. Whether a particular function is executed by hardware or software driving the hardware depends on a specific application and design constraints of the technical solution. A person skilled in the art may use different methods for each specific application to implement the described functions, but such an implementation should not be considered beyond the scope of the present application.

In the embodiments of the present application, functional modules of the apparatus for determining the FTL algorithm may be divided based on the above methods. For example, the apparatus for determining the FTL algorithm may include various functional modules corresponding to divided functions, or two or more functions may be integrated in one processing module. The above integrated modules may be implemented either in a form of hardware or software functional modules. It should be noted that division of modules in the embodiments of the present application is illustrative and represents only a logical function division. Other division methods may be used in actual implementation.

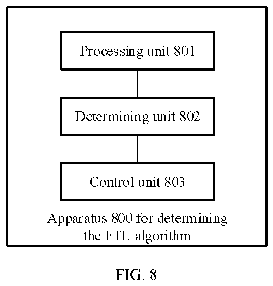

For example, FIG. 8 illustrates a possible structural diagram of an apparatus for determining the FTL algorithms (referred to as an apparatus 800 for determining the FTL algorithm) involved in the above embodiments. The apparatus 800 for determining the FTL algorithm includes a processing unit 801, a determining unit 802, and a control unit 803. The processing unit 801 determines the address mapping information based on the first FTL algorithm during the time period, where the address mapping information is configured to indicate the correspondence between the logical address and the physical address of the solid state drive during the process of processing a read/write task, for example, S301 shown in FIG. 3, S401 shown in FIG. 4, S501 shown in FIG. 5, S601 shown in FIG. 6, and S701 shown in FIG. 7. The determining unit 802 is configured to determine the second FTL algorithm from the plurality of FTL algorithms, where the performance of processing the read/write task during the time period based on the second FTL algorithm is higher than the performance of processing the read/write task during the time period based on the first FTL algorithm, for example, S302 shown in FIG. 3, S402 shown in FIG. 4, S502 shown in FIG. 5, S602 to S603 shown in FIG. 6, and S702 to S703 shown in FIG. 7. The control unit 803 is configured to control the solid state drive to enable target address mapping information determined based on the second FTL algorithm, for example, S303 shown in FIG. 3, S403 shown in FIG. 4, S503 shown in FIG. 5, S604 shown in FIG. 6, and S704 shown in FIG. 7.

Optionally, the determining unit 802 is specifically configured to: according to the plurality of read/write tasks processed based on the first FTL algorithm during the time period, determine the second FTL algorithm from the plurality of FTL algorithms.

Optionally, the determining unit 802 is specifically configured to: based on the read/write condition of the plurality of read/write tasks, determine the target read/write type; and based on the target read/write type, determine the second FTL algorithm from the plurality of FTL algorithms.

Optionally, the target read/write type includes a read task and a write task. In a case that the target read/write type is the write task, the second FTL algorithm includes the DFTL algorithm; and in a case that the target read/write type is the read task, the second FTL algorithm includes the BAN algorithm.

Optionally, the target read/write type includes a sequential read task, a sequential write task, a random write task, and a random read task. In a case that the target read/write type is the sequential read task or a random read task, the second FTL algorithm includes the BAN algorithm; in a case that the target read/write type is the sequential write task, the second FTL algorithm includes the FAST algorithm; and in a case that the target read/write type is the random write task, the second FTL algorithm includes the DFTL algorithm.

Optionally, the determining unit 802 is specifically configured to: based on the proportion of the read task among the plurality of read/write tasks, and/or, the proportion of the write task among the plurality of read/write tasks, determine the target read/write type.

Optionally, the determining unit 802 is specifically configured to: based on the proportion of the read task among the plurality of read/write tasks and the fluctuation of the proportion of the read task during the target time period, and/or, the proportion of the write task among the plurality of read/write tasks and the fluctuation of the proportion of the write task during the target time period, determine the target read/write type.

Optionally, the determining unit 802 is specifically configured to: in a case that the proportion of the read task among the plurality of read/write tasks is greater than or equal to the first threshold, and the fluctuation ratio of the proportion of the read task during the target time period is less than or equal to the second threshold, determine the target read/write type as the read task.

Optionally, the determining unit 802 is specifically configured to: in a case that the proportion of the write task among the plurality of read/write tasks is greater than or equal to the third threshold, and the fluctuation ratio of the proportion of the write task during the target time period is less than or equal to the fourth threshold, determine the target read/write type as the write task.

Optionally, the determining unit 802 is specifically configured to: based on the at least one of the proportion of the random read task among the plurality of read/write tasks, the proportion of the sequential read task among the plurality of read/write tasks, the proportion of the random write task among the plurality of the read/write tasks, or the proportion of the sequential write task among the plurality of read/write tasks, determine the target read/write type.

Optionally, the determining unit 802 is specifically configured to: based on the at least one of the proportion of the random read task among the plurality of read/write tasks, a fluctuation of the proportion of the random read task during the target time period, the proportion of the sequential read task among the plurality of read/write tasks, a fluctuation of the proportion of the sequential read task during the target time period, the proportion of the random write task among the plurality of the read/write tasks, a fluctuation of the proportion of the random write task during the target time period, the proportion of the sequential write task among the plurality of read/write tasks, or a fluctuation of the proportion of the sequential write task during the target time period, determine the target read/write type.

Optionally, the determining unit 802 is specifically configured to: in a case that the proportion of the random read task among the plurality of read/write tasks is greater than or equal to the fifth threshold, and the fluctuation ratio of the proportion of the random read task during the target time period is less than or equal to the sixth threshold, determine the target read/write type as the random read task.

Optionally, the determining unit 802 is specifically configured to: based on the proportion of the sequential read task among the plurality of the read/write tasks and the fluctuation of the proportion of the sequential read task during the target time period, determine the target read/write type, including: in a case that the proportion of the sequential read task among the plurality of read/write tasks is greater than or equal to the seventh threshold, and the fluctuation ratio of the proportion of the sequential read task during the target time period is less than or equal to the eighth threshold, determining the target read/write type as the sequential read task.

Optionally, the determining unit 802 is specifically configured to: based on the proportion of the random write task among the plurality of the read/write tasks and the fluctuation of the proportion of the random write task during the target time period, determine the target read/write type, including: in a case that the proportion of the random write task among the plurality of read/write tasks is greater than or equal to the ninth threshold, and the fluctuation ratio of the proportion of the random write task during the target time period is less than or equal to the tenth threshold, determining the target read/write type as a random write task.

Optionally, the determining unit 802 is specifically configured to: based on the proportion of the sequential write task among the plurality of the read/write tasks and the fluctuation of the proportion of the sequential write task during the target time period, determine the target read/write type, including: in a case that the proportion of the sequential write task among the plurality of read/write tasks is greater than or equal to the eleventh threshold, and the fluctuation ratio of the proportion of the sequential write task during the target time period is less than or equal to the twelfth threshold, determining the target read/write type as the sequential write task.

Optionally, the determining unit 802 is specifically configured to: based on the received target instruction, determine the second FTL algorithm from the plurality of FTL algorithms, where the target instruction indicates the second FTL algorithm.

Optionally, the determining unit 802 is specifically configured to: based on the identifier of the second FTL algorithm included in the target instruction, determine the second FTL algorithm from the plurality of FTL algorithms.

Optionally, the determining unit 802 is specifically configured to: when the target instruction includes the identifier of the target read/write type, based on the identifier of the target read/write type, determine the second FTL algorithm from the plurality of FTL algorithms, where the target read/write type is the read/write type determined based on the plurality of read/write tasks processed based on the first FTL algorithm.

Optionally, the control unit 803 is further configured to: when the solid state drive is restarted, generate the mapping table of the target logical address and the target physical address of the solid state drive based on the second FTL algorithm; where the mapping table includes the target address mapping information, the target logical address is a logical address to which data has been written in the target solid state drive, and the target physical address is the physical address to which the data has been written in the target solid state drive.

Optionally, the control unit 803 is further configured to: in a case that the quantity of the read/write task received during the recent time period is less than or equal to the preset value, restarting the solid state drive.

For detailed description of the above optional methods, reference may be made to the above method embodiments, which are not repeated here. In addition, for explanations and beneficial effects of any of the above apparatus 800 for determining the FTL algorithms, reference may be made to corresponding method embodiments, which are not repeated here.

The embodiments of the present application further provide a computer device, including a processor and a memory. The processor is connected to the memory, and the memory stores a computer-executable instruction, and the processor executes the computer-executable instruction, to implement the data processing method provided in the above embodiments. The embodiments of the present application do not limit a specific form of the computer device. For example, the computer device may be a terminal apparatus or a network device. The terminal apparatus may be referred to as a terminal, a user equipment (user equipment, UE), an access terminal, a user unit, a user station, a mobile station, a remote station, a remote terminal, a mobile device, a user terminal, a wireless communication device, a user agent, a user apparatus, etc. The terminal apparatus may be a mobile phone, an augmented reality (augmented reality, AR) device, a virtual reality (virtual reality, VR) device, a tablet, a laptop, an ultra-mobile personal computer (ultra-mobile personal computer, UMPC), a netbook, a personal digital assistant (personal digital assistant, PDA), etc. The network device may be a server, etc. The server may be a physical server, a logical server, or two or more physical or logical servers that share different responsibilities and work with each other to implement various server functions.

The embodiments of the present application further provide a computer-readable storage medium storing a computer program. When the computer program runs on a computer, the computer is enabled to implement the method implemented by any one of the above computer devices.

For explanations and beneficial effects of any of the above computer-readable storage media, reference may be made to corresponding embodiments, which are not repeated here.

The embodiments of the present application further provide a chip. The chip integrates a control circuit and one or more ports configured to implement functions of the computer device. Optionally, for features supported by the chip, reference may be made to the above description, and are not repeated here. A person skilled in the art may understand that all or part of steps in the above embodiments may be accomplished by a program directing relevant hardware. The program may be stored in the computer-readable storage medium. The storage medium may be a random-access memory, a read-only memory, etc. The processing unit or processor may be a central processing unit, a general-purpose processor, an application-specific integrated circuit (application specific integrated circuit, ASIC), a digital signal processor (digital signal processor, DSP), a field-programmable gate array (field programmable gate array, FPGA), or other programmable logic devices, transistor logic devices, hardware components, or any combination of them.

The embodiments of the present application further provide a computer program product including an instruction. When the instruction runs on a computer, the computer is enabled to implement any one method in the above embodiments. The computer program product includes one or more computer instructions. When a computer program instruction is loaded and executed on the computer, processes or functions in the embodiments of the present application are generated in whole or in part. The computer may be a general-purpose computer, a special-purpose computer, a computer network, or other programmable devices. The computer instruction may be stored in the computer-readable storage medium or transmitted from one computer-readable storage medium to another computer-readable storage medium. For example, the computer instruction may be transmitted from a website, computer, server, or data center to another website, computer, server, or data center by wired means (such as a coaxial line, an optical fiber, or a digital subscriber line [digital subscriber line, DSL]), or by wireless means (such as infrared, radio, microwave, etc.). The computer-readable storage medium may be any available medium accessible to the computer, or a data storage device integrating one or more available media, such as a server or a data center. The available medium may be a magnetic medium (such as a floppy drive, a drive, or a tape), an optical medium (such as a digital video disc [DVD]), or a semiconductor medium (such as a solid state drive [SSD]).

It should be noted that devices provided in the embodiments of the present application configured to store the computer instructions or the computer programs, such as but not limited to, the memory, the computer-readable storage medium, the communication chip, and so on, are all non-transitory (non-transitory).

The above embodiments may be realized wholly or partly by software, hardware, firmware, or any combination thereof. When implemented using a software program, the embodiments may be realized wholly or partly in a form of a computer program product. The computer program product includes one or more computer instructions. When the computer program instruction is loaded and executed on the computer, processes or functions in the embodiments of the present application are generated in whole or in part. The computer may be a general-purpose computer, a special-purpose computer, a computer network, or other programmable devices. The computer instruction may be stored in the computer-readable storage medium or transmitted from one computer-readable storage medium to another computer-readable storage medium. For example, the computer instruction may be transmitted from a website, computer, server, or data center to another website, computer, server, or data center by wired means (such as a coaxial line, an optical fiber, or a digital subscriber line [digital subscriber line, DSL]), or by wireless means (such as infrared, radio, microwave, etc.). The computer-readable storage medium may be any available medium accessible to the computer, or a data storage device integrating one or more available media, such as a server or a data center. The available medium may be a magnetic medium such as a floppy drive, a drive, or a tape, an optical medium such as a DVD, or a semiconductor medium such as a solid state drive (solid state disk, SSD).

Though the present application has been described herein with various embodiments, other variations in the disclosed embodiments will be understood and realized by a person skilled in the art by viewing the drawings, disclosure, and claims during an implementation of the claimed application. In the claims, the term "comprising" does not exclude other elements or steps, and "a" or "an" does not exclude plurality. A single processor or other units may implement several functions listed in the claims. Certain measures are noted in dependent claims that are different from each other, but it does not mean that these measures cannot be combined to produce good results.

Through the present application has been described with specific features and embodiments, it is apparent that various modifications and combinations thereof may be made without departing from the spirit and scope of the present application. Accordingly, the specification and drawings are merely illustrative descriptions of the present application as defined by the appended claims and are deemed to cover any and all modifications, variations, combinations, or equivalents within the scope of the present application. It is apparent that a person skilled in the art may make various modifications and variations of the present application without departing from the spirit and scope of the present application. Therefore, if the modifications and variations of the present application fall within the scope of the claims and equivalent technologies of the present application, the present application is intended to cover these modifications and variations.

## Claims

1. A method for determining a flash translation layer algorithm, applied to a solid state drive, wherein a plurality of FTL algorithms are stored in the solid state drive, and the plurality of FTL algorithms comprise a first FTL algorithm; and the method comprises:
determining address mapping information based on the first FTL algorithm during a time period, wherein the address mapping information is configured to indicate a correspondence between a logical address and a physical address of the solid state drive during a process of processing a read/write task;
determining a second FTL algorithm from the plurality of FTL algorithms; wherein performance of processing the read/write task during the time period based on the second FTL algorithm is higher than performance of processing the read/write task during the time period based on the first FTL algorithm; and
controlling the solid state drive to enable target address mapping information determined based on the second FTL algorithm.

2. The method according to claim 1, wherein determining the second FTL algorithm from the plurality of FTL algorithms comprises:
according to a read/write condition of a plurality of read/write tasks processed based on the first FTL algorithm during the time period, determining a target read/write type; and
based on the target read/write type, determining the second FTL algorithm from the plurality of FTL algorithms.

3. The method according to claim 2,
wherein the target read/write type comprises a read task and a write task;
in a case that the target read/write type is the write task, the second FTL algorithm comprises a DFTL algorithm; and in a case that the target read/write type is the read task, the second FTL algorithm comprises a BAN algorithm.

4. The method according to claim 2,
wherein the target read/write type comprises a sequential read task, a sequential write task, a random write task, and a random read task;
in a case that the target read/write type is the sequential read task or the random read task, the second FTL algorithm comprises a BAN algorithm; in a case that the target read/write type is the sequential write task, the second FTL algorithm comprises a FAST algorithm; and in a case that the target read/write type is the random write task, the second FTL algorithm comprises a DFTL algorithm.

5. The method according to claim 3, wherein according to the read or write condition of the plurality of read or write tasks processed based on the first FTL algorithm during the time period, determining the target read/write type, comprises:
based on a proportion of a read task among the plurality of read/write tasks, and/or, a proportion of a write task among the plurality of read/write tasks, determining the target read/write type.

6. The method according to claim 5, wherein based on the proportion of the read task among the plurality of read/write tasks, and/or, the proportion of the write task among the plurality of read/write tasks, determining the target read/write type, comprises:
based on the proportion of the read task among the plurality of read/write tasks and a fluctuation of the proportion of the read task during a target time period, and/or the proportion of the write task among the plurality of read/write tasks and a fluctuation of the proportion of the write task during a target time period, determining the target read/write type.

7. The method according to claim 6,
wherein based on the proportion of the read task among the plurality of read/write tasks and the fluctuation of the proportion of the read task during the target time period, determining the target read/write type, comprises: in a case that the proportion of the read task among the plurality of read/write tasks is greater than or equal to a first threshold, and a fluctuation ratio of the proportion of the read task during the target time period is less than or equal to a second threshold, determining the target read/write type as the read task; or,
based on the proportion of the write task among the plurality of read/write tasks and the fluctuation of the proportion of the write task during the target time period, determining the target read/write type, comprises: in a case that the proportion of the write task among the plurality of read/write tasks is greater than or equal to a third threshold, and a fluctuation ratio of the proportion of the write task during the target time period is less than or equal to a fourth threshold, determining the target read/write type as the write task.

8. The method according to claim 4, wherein according to the read/write condition of the plurality of read/write tasks processed based on the first FTL algorithm during the time period, determining the target read/write type, comprises:
based on at least one of a proportion of a random read task among the plurality of read/write tasks, a proportion of a sequential read task among the plurality of read/write tasks, a proportion of a random write task among the plurality of read/write tasks, or a proportion of a sequential write task among the plurality of read/write tasks, determining the target read/write type.

9. The method according to claim 8, wherein based on the at least one of the proportion of the random read task among the plurality of read/write tasks, the proportion of the sequential read task among the plurality of read/write tasks, the proportion of the random write task among the plurality of read/write tasks, or the proportion of the sequential write task among the plurality of read/write tasks, determining the target read/write type, comprises:
based on at least one of the proportion of the random read task among the plurality of read/write tasks and a fluctuation of the proportion of the random read task during a target time period, the proportion of the sequential read task among the plurality of read/write tasks and a fluctuation of the proportion of the sequential read task during a target time period, the proportion of the random write task among the plurality of the read/write tasks and a fluctuation of the proportion of the random write task during a target time period, or the proportion of the sequential write task among the plurality of read/write tasks and a fluctuation of the proportion of the sequential write task during a target time period, determining the target read/write type.

10. The method according to claim 9,
wherein based on the proportion of the random read task among the plurality of read/write tasks and the fluctuation of the proportion of the random read task during the target time period, determining the target read/write type, comprises: in a case that the proportion of the random read task among the plurality of read/write tasks is greater than or equal to a fifth threshold, and a fluctuation ratio of the proportion of the random read task during the target time period is less than or equal to a sixth threshold, determining the target read/write type as the random read task; or
based on the proportion of the sequential read task among the plurality of read/write tasks and the fluctuation of the proportion of the sequential read task during the target time period, determining the target read/write type, comprises: in a case that the proportion of the sequential read task among the plurality of read/write tasks is greater than or equal to a seventh threshold, and a fluctuation ratio of the proportion of the sequential read task during the target time period is less than or equal to an eighth threshold, determining the target read/write type as the sequential read task; or
based on the proportion of the random write task among the plurality of read/write tasks and the fluctuation of the proportion of the random write task during the target time period, determining the target read/write type, comprises: in a case that the proportion of the random write task among the plurality of read/write tasks is greater than or equal to a ninth threshold, and a fluctuation ratio of the proportion of the random write task during the target time period is less than or equal to a tenth threshold, determining the target read/write type as the random write task; or
based on the proportion of the sequential write task among the plurality of read/write tasks and the fluctuation of the proportion of the sequential write task during the target time period, determining the target read/write type, comprises: in a case that the proportion of the sequential write task among the plurality of read/write tasks is greater than or equal to an eleventh threshold, and a fluctuation ratio of the proportion of the sequential write task during the target time period is less than or equal to a twelfth threshold, determining the target read/write type as the sequential write task.

11. The method according to claim 1, wherein determining the second FTL algorithm from the plurality of FTL algorithms comprises:
based on a received target instruction, determining the second FTL algorithm from the plurality of FTL algorithms; wherein the target instruction indicates the second FTL algorithm.

12. The method according to claim 11, wherein based on the received target instruction, determining the second FTL algorithm from the plurality of FTL algorithms, comprises:
based on an identifier of the second FTL algorithm comprised in the target instruction, determining the second FTL algorithm from the plurality of FTL algorithms; or
based on an identifier of the target read/write type comprised in the target instruction, determining the second FTL algorithm from the plurality of FTL algorithms; and the target read/write type being the read/write type determined based on the plurality of read/write tasks processed based on the first FTL algorithm.

13. The method according to any one of claims 1 to 12, further comprising:
when the solid state drive is restarted, based on the second FTL algorithm, generating a mapping table of a target logical address and a target physical address of the solid state drive;
wherein the mapping table comprises the target address mapping information, the target logical address is a logical address to which data has been written in a target solid state drive, and the target physical address is a physical address to which data has been written in the solid state drive.

14. The method according to claim 13, further comprising:
in a case that a quantity of a read/write task received during a recent time period is less than or equal to a preset value, restarting the solid state drive.

15. A computer device, comprising a processor connected to a memory;
wherein the memory is configured to store a computer-executable instruction, and the processor executes the computer-executable instruction stored in the memory to enable the computer device to implement the method according to any one of claims 1 to 14.

16. A computer-readable storage medium for storing a computer instruction, wherein the computer instruction is executed on a computer, enabling the computer to implement the method according to any one of claims 1 to 14.
